# EUROPEAN PATENT SPECIFICATION

(11) **EP 1 225 771 B1**
(45) Date of publication and mention of the grant of the patent: **23.06.2004**
(21) Application number: 01850013.2
(22) Date of filing: 17.01.2001
(51) Int. Cl.: H04Q 7/22

(54) **Method and system for selective reception of packet data in a wireless communication network**
Verfahren und System zum selektiven Empfangen von Paketdaten in einem drahtlosen Kommunikationsnetz
Procédé et système pour la réception sélective de données en paquets dans un réseau de communication sans fil

(43) Date of publication of application: 24.07.2002
(73) Proprietor: MICROSOFT CORPORATION, Redmond, WA 98052 (US)
(72) Inventor: Johansson, Stefan, 111 29 Stockholm (SE)
(74) Representative: Henningsson, Gunnar

(56) References cited:
- EP-A- 1 083 768
- WO-A-99/16268

## Description

### Technical Field,

The present invention relates to methods, apparatuses and a system in connection with pushing of packet data from an originator to a wireless communication station.

### Background of the Invention

Today, different kind of digital radio communications networks that support packet data transfer are being evolved. This means that mobile users having access to these radio communication networks are provided with the possibility to communicate packet data with different packet data networks, such as with the Internet, but also with corporate intranets and X.25 networks and the like. Thus, the digital radio, or wireless, communication network will be a wireless extension of, for example, the Internet and existing X.25 networks. Subscribers to such a radio communication network , i.e. the mobile users, will be able to benefit from most of the applications designed for these data packet protocols, such as Web browsing and exchange of e-mails etc., from their wireless equipment with which they access the wireless communication networks. Furthermore, a number of new mobile data services are currently being developed which will make use of these packet data transfer capabilities, while the performance of existing mobile data services will be improved.

Many of the new and existing mobile data services will make use of the possibility to push data to mobile users. Typically, to push data to a user means that a push server of a system or network automatically provides the user with some kind of information, i.e. the transfer of information is performed on the initiative of the push server. Often this information is of the kind which is desired by the user, and therefore defined by a set of criteria in order to meet the desires of the user, e.g. information to which the user subscribes. However, since there are no standardized mechanism for preventing certain information to be pushed, in practice, any server may push any information to any user.

The technology of pushing information is today perhaps most widely used for pushing information to a stationary user, such as a user operating a computer connected to the Internet. However, with the rapid growth of mobile communications, in combination with the flexibility of being able to be reached by pushed information at any location, the possibility of receiving pushed information from a push server will become more and more interesting for users that are connected to wireless communication networks.

One of the most important grounds for the development described above is, besides the introduction of packet data transmissions to/from the wireless communication stations operated by the mobile users, the technology enhancements of the radio communications networks, such as the cellular radio communications networks, which provide higher and higher bandwidths for these packet data transmissions. Examples of wireless communication network with higher bandwidths and with support for packet data transfer to the wireless terminal of a mobile user are PDC-P networks (Pacific Digital Cellular), which in Japan provides the existing I-mode service, GSM networks (Global System for Mobile Communications) providing GPRS services (General Packet Radio Service), systems using radio networks based on EDGE technology (Enhanced Data Rates for GSM and TDMA/136 Evolution) or on WCDMA technology (Wideband Code Division Multiple Access), or any other forthcoming new generation of wireless communication networks which are known as UMTS networks (Universal Mobile Telephony Standard), or 3G networks, and which are based on the broadband radio networks WCDMA or cdma2000.

The pushing of packet data to a mobile user corresponds to a process in which the wireless communication network initiates the packet data transfer to the user's wireless communication station, wherein the packet data being transferred most often is received by the wireless communication network from an external source, i.e. a push server on an external network which is operatively connected to the wireless communication network. When pushing information to a wireless communication station there are three important requirements that have to be met in order for a wireless communication network to be able to initiate the packet data transfer to the wireless station. These requirements are that 1) the wireless station has been switched on, 2) the wireless station has identified itself to those parts of the wireless communication network that provides the packet data service, and that 3) a Packet Data Protocol (PDP) address has been allocated to the wireless station.

After the requirements above have been met, measures are taken by the wireless network for initializing and activating a packet data service to the wireless station, measures that are well known in the art. After activation of the packet data service, packet data addressed to the PDP address that has been allocated to a wireless station will be routed to that station. A PDP address can be allocated to the station either as a static or a dynamic PDP address. Thus, the PDP address to be used by a server wishing to push data to a mobile communication station, i.e. to transfer data without the station having specifically requested the data, is either a permanent (static) or a temporary (dynamic) address allocated to that station.

The PDP address, irrespective of whether it is static or dynamic, needs to be known to a server that wishes to transfer packet data to the station. The PDP address can become known to the server by making an inquiry to the appropriate repository, possibly different repositories depending on whether static or dynamic addresses are used, in the operator's wireless communication network.

In the Swedish patent application 9903637-8, filed on 8 October 2000, a number of drawbacks related to the above described technique of inquiring for a mobile users PDP address are discussed. These drawbacks relate to the consequences of such things as: signaling load against the repository storing the PDP addresses; a change of the PDP address allocated to a specific mobile user from time to time; and the routing of PDP address requests to repositories.

The solution, according to the disclosure of the above identified patent application, is that a networks server, that wants to transfer packet data to a wireless communication station via a wireless communication network, requests that the wireless station sets up a Packet Data Protocol connection with the server. The request is accomplished by sending a message to the station, via a message service provided by the wireless network, using a subscriber's unique user identification number (such as a MSISDN number). In reply to the received message, which includes the packet data network address of the requesting server, the wireless station identifies itself to the packet data service part of the wireless network, if not already identified, activates a provided packet data service, if not already activated, and establishes a PDP connection with the requesting server. Using this PDP connection, the server may transfer packet data to the wireless communication station. This solution furthermore enables packet data to be transferred, or pushed, to a wireless station regardless of which current state the wireless station is in with respect to the packet data service of the wireless network.

When a packet switched connection, rather than a circuit switched connection, is used for transferring data to/from a user's wireless station, which for example is the case when introducing GPRS in a GSM system, it will be possible for the mobile user to be constantly connected not only to the wireless network, but also to the Internet or some other packet data network via the wireless network and an interconnecting gateway. As the mobile user is constantly connected, the user will be charged for the actual bandwidth he uses. This means that the mobile user will be charged for each packet transmitted or received by the user, rather than for the time duration of the data transfer. Thus, a subscriber will be charged for any information received as packet data, regardless of which source that transfers, or pushes, the packet data to the subscriber.

The above described solution provided by the identified Swedish application 9903637-8 allows any network server to transfer a packet data network address to a subscriber by addressing the subscriber's unique user identification number. In this respect it would be desirable that the mobile user more easily could control to which network server he initiates a PDP connection. Moreover, it would be preferred that the mobile user could perform this control in real-time, thus enabling the mobile user to make a decision whether or not to establish a PDP connection at the particular moment when a server wishes to transfer packet data to the mobile user. A drawback with the Swedish patent application 9903637-8 is that the above described solution does not include any satisfactory means for enabling a mobile user to perform such a desired control of PDP connection establishment, and thus, of information transfer from any network server wishing to transmit data to the mobile user. Thus, it does not provide a satisfactory scheme for preventing that a mobile user receives non-desired information. Not only is reception of non-desired information time consuming and frustrating for the mobile user, it is also costly since the mobile user have to pay for the received packet data over his subscription bill from the operator.

The drawbacks described above regarding the reception of non-desired information from any network server, and the additional drawback of being charged by an operator for such information, are also present in any situation where a network server knows the packet data network address of the user in advance and uses this address for establishing a packet data session with the user's wireless station.

WO 99/16268 discloses a method of selectively permitting transmission of packet data to a mobile terminal. An Internet host transmits packet data with the IP address of a mobile terminal. If the terminal decides to receive the packet data, it enters a packet state for reception of the packet data.

EP 1 083 768 discloses the conversion of an IP address in a data packet sent by a service provider into a subscriber identity identifying the receiver in a communication system.

### Summary of the Invention

An object of the present invention is to overcome at least one of the drawbacks described above that are present in connection with pushing packet data, i.e. transmission of packet data on an originator's own initiative, from an originator to a mobile user in a wireless communication network.

According to the present invention, said object is achieved by a method, a computer-readable medium and a wireless communication station having the features as defined in the appended claims and representing different aspects of the invention.

According to the invention, when a wireless communication station from an originator of information receives the originator's network address, the wireless station acquires an identity corresponding to the received network address. This identity is used as basis when the wireless station determines if packet data reception from the originator is desired. If such reception is desired, the wireless station establishes a packet data session with the originator. Using this packet data session, the originator is able to transfer, or push, packet data to the wireless station.

Thus, according to the invention, pushing of packet data from an originator to a wireless communication station is only facilitated if it is determined by the wireless station that reception of packet data from the originator is desired. Since the wireless station will receive any originator's network address and then decide whether or not to facilitate reception of packet data based on a corresponding identity only, any originator with the ability to transfer its network address to the wireless station will have the potential ability to push packet data to the wireless station. Of course, provided that the originator has access to a packet data network which is operatively connected to the wireless communication network. However, such pushing of packet data can only be effectuated if the user of the wireless station chooses to facilitate reception of the pushed packet data.

Furthermore, the invention enables a user of a wireless station to control the reception of pushed packet data without requiring that the user, or its wireless station, has an established relationship with any potential originator providing pushed packet data, or that the wireless station has been particularly configured with respect to any potential originator, since such control solely is based on the identity of the originator. Moreover, the user is able to perform this control in real-time. For example, a user may choose to receive pushed packet data from an originator known to have interesting information relating to a geographical region, or from an originator which the user only sometimes wants information from in dependence upon, e.g., his mood or his available time to read or otherwise perceive the information.

According to the invention, the wireless station is responsible for acquiring the identity corresponding to a network address received from an originator. Thus, this is performed without any participation of the originator. This feature is advantageous since it adds a security aspect to the reception of pushed information. An originator will not be able to hide behind a false identity and he will have nothing to gain by transmitting a "stolen" or "borrowed" network address to the wireless station. Preferably, the identity corresponding to the received network address is acquired by using an address translation server. Since an address translation server typically is designed to regularly check what identity that corresponds to what network address, and to store these relationships in some kind of repository, the address translation server will upon request indicate the identity that currently is associated with a particular network address.

Moreover, since the packet data session used for the information transfer from the network server is established by the wireless communication station, there is no need to beforehand provide any network server with the network address of the wireless communication station. An advantage with this, among others, is that a network server can not establish a session to the wireless communication station in order to transfer, or push, information, possibly non-desired, to the wireless station.

A further advantage provided by the establishment of the packet data session from the wireless station, is that the originator does not generate any signaling load against any repository in the wireless network storing packet data network addresses, something which otherwise can be a heavy burden on the repository when numerous originators, or servers, are trying to acquire packet network addresses to wireless stations connected to the wireless network. Furthermore, if dynamic packet data network addresses are used by the wireless network, which most often is the case, the burden will be even heavier since the network address allocated to a specific wireless station will change from time to time. Moreover, when a wireless station is roaming between different wireless networks of different operators, the problem of determining to which operator's repository a server's requests for a packet data network addresses should be routed is avoided.

According to an exemplifying embodiment, a user is prpvided with the ability to control reception of pushed packet data in real-time by having the wireless station display the identity to the user, and then accept a user input in response thereto. In response to a confirmation, the wireless station effectuates an establishment of a packet data session with the originator. However, if the user inputs a rejection, a packet data session is not established, and reception of pushed packet data is thereby not facilitated.

Advantageously, the network addresses received by the wireless station is an Internet Protocol (IP) addresses. In this case the address translation server is preferably a DNS server (Domain Name System) which upon reception of an IP address returns a server host name.

According to an embodiment of the invention, the wireless station receives the originators network address in a short message provided to the wireless station by a short message service. The establishment of a packet data session with the originating server is either made based on this network address, or, via the address translation server, based on the corresponding identity of the originator. Preferably, an application executing in the wireless communication station, and controlling its operation, is responsible for the establishment of the packet data session. An originator is typically connected to a packet data network which is operatively connected to the wireless communication network. However, an originator may also be directly connected to the wireless communication network.

In an embodiment, use is made of an originator identification code. By verifying that a server, with which a packet data session is established for reception of packet data, uses the same identification code as the originator of a received network address, yet another security level is added.

It is to be understood that what is meant by the expression wireless communication station in this document, sometimes herein referred to only as wireless station, is either a stand-alone RF (Radio Frequency) transceiver having processing capabilities and displaying means, such as a mobile telephone or a hand-held PDA (Personal Digital Assistant), or, a RF transceiver together with any kind of portable or stationary equipment having processing capabilities, such as a portable laptop computer or a stationary personal computer, wherein the RF transceiver is arranged in communication with the portable or stationary equipment.

Even though the following description of an exemplifying embodiment will refer to a GSM network providing a GPRS service and an SMS-C (Short Message Service Center) providing a short message service, it is to be understood by those skilled in the art that the invention is not limited to these systems. The invention is advantageously applied to any wireless communication network that provides packet data transmissions to its connected users and that has an associated message service for transmitting short messages to the users. Such wireless communication networks have been exemplified in the background part of this application.

### Brief Description of the Drawings

Further features and advantages of the invention will become more readily understood from the following detailed description of exemplifying embodiments of the invention when taken in conjunction with the accompanying drawings, in which:
Fig. 1 schematically shows an exemplifying overall system environment in which an embodiment of the invention is included and operable; and
Fig. 2 is a flow chart of an embodiment of a method according to the invention which is practiced by a wireless communication station.

### Detailed Description of the Invention

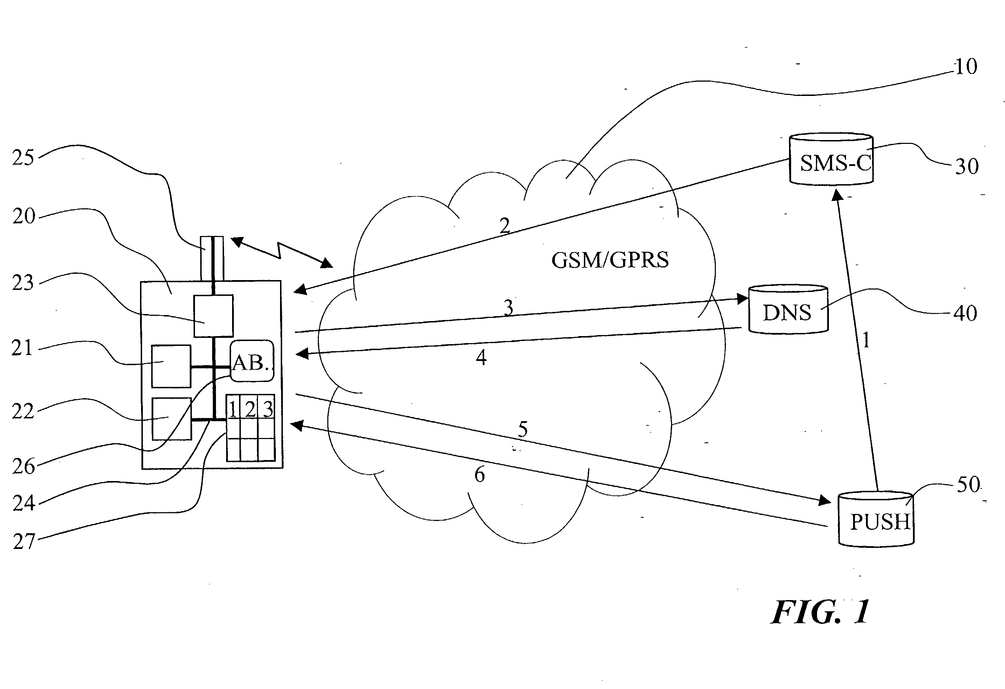

With reference to Fig. 1, an exemplifying embodiment of the invention will know be described in greater detail. Fig. 1 shows a wireless communication network 10, a wireless communication station 20, a node 30 for generating short messages for transmission to wireless communication stations, an address translation server 40, and an originator in the form of a network server 50 operatively connected to the wireless communication network 10. The wireless communication network is exemplified with a GSM network (Global System for Mobile Communication) and the wireless communication station with a GPRS mobile station. The packet data transferring capabilities of the GSM network 10 is provided by the GPRS service (General Packet Radio Service). GPRS being a standardization from the European Telecommunications Standard Institute (ETSI) on packet data in GSM systems. The node for generating short messages is exemplified with a SMS-C (Short Message Service Center) and the address translation server with a DNS server (Domain Name System). The network server 50 could be any server connected to the Internet or to a corporate Intranet to which the wireless communication network 10 is operatively connected by means of an appropriate gateway (not shown).

The architecture and operation of a GSM Network providing a GPRS service, as well as the standardization thereof, should be well known to persons skilled in the art. For this reason, only those features or aspects of GSM and GPRS that are of direct relevance to this described embodiment of the invention will be described herein.

A GSM network 10 which includes a GPRS service for handling packet data traffic is equipped with a Serving GPRS Support Node (SGSN) (not shown) and a Gateway GPRS Support Node (GGSN) (not shown). The SGSN is the node within the GSM infrastructure that sends and receives packet data to and from a wireless GPRS mobile station 20 via a Base Station System (not shown). The GPRS mobile station 20 communicates with the Base Station System over an air interface in accordance with the standardization of GSM and GPRS. The SGSN also transfers packets between the GPRS station 20 and the GGSN. Furthermore, the SGSN handles PDP contexts (Packet Data Protocol) for connections with any server in any external packet data network, such as with the network server 50 which is operatively connected to the GSM network 10. The GGSN, which is connected to the SGSN, is the gateway of the GSM/GPRS system to external packet data networks and routes packets between the SGSN and an external packet data network, e.g. the Internet or an corporate Intranet. For more information about GPRS, reference is made to ETSI standardization documents EN 301 113 V6.1.1 (1998-11) and Draft ETSI EN 301 344 V6.4.0 (1999-08).

Furthermore, the architecture and operation of the SMS-C and the DNS server are well known to persons with ordinary skills in the art, thus, only features of direct relevance to the present embodiment will be described herein.

The wireless communication station of the present invention, i.e. the GPRS mobile station 20 in the embodiment of Fig. 1, includes a state of the art microprocessor 21, a main memory 22 implemented by read only memory (ROM) and/or random access memory (RAM) or equivalents thereof, Input/output circuitry, such as a display 26 and a keyboard/keypad 27, for communicating with a user, interface circuitry 23 in the form of transmitting/receiving radio frequency circuitry for communicating with the GSM network via an antenna 25 and the air interface, a bus 24 interconnecting the elements of the GPRS mobile station, as well as other appropriate components. Of these elements, at least some are controlled or otherwise designed to facilitate the practice of the method of the invention.

The microprocessor 21 executes appropriate computer-executable components stored in the main memory 22, thus controlling the elements and the overall wireless communication station/GPRS mobile station 20 to function in accordance with the method of the invention. Alternatively, these computer-executable components are stored on a pre-recorded disk, in a pre-programmed memory device, or any other computer-readable medium being separate from the wireless communication station 20. When the wireless communication station 20 and its included microprocessor 21 is provided with access to this computer-readable medium, its stored computer-executable components will direct the microprocessor 21 to control the overall wireless communication station 20 to function in accordance with the method of the invention.

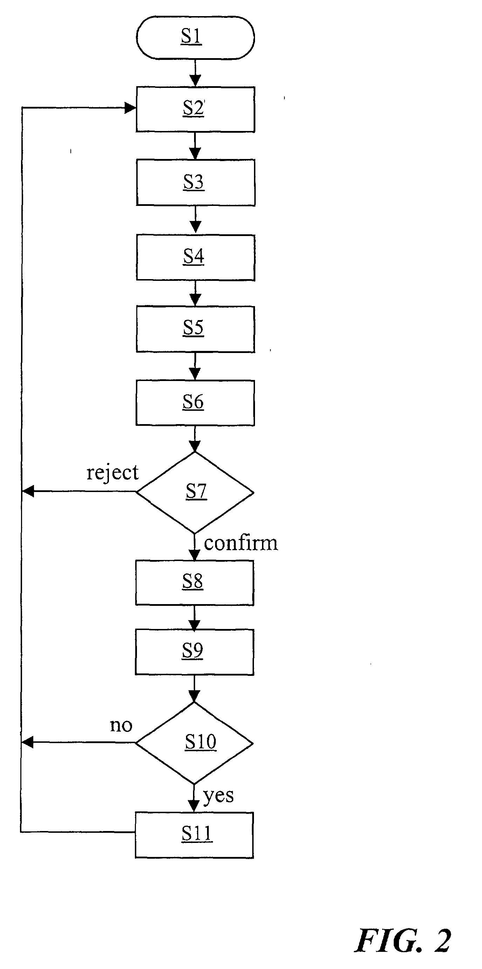

The operation of the wireless communication station/GPRS mobile station 20 will be more fully understood from the description below and from the description of the flow chart shown in Fig. 2.

The operation of the overall system and of the wireless communication station/GPRS mobile station in Fig. 1 in accordance with the embodiment will now be described in a step by step fashion, wherein each step has a reference numeral in Fig. 1. The described operation is started when the originator, i.e. the network server or push server 50, wants to push packet data over a TCP/IP connection to a GPRS subscriber operating a GPRS mobile station 20.
1. In step 1 the push server 50 connects to the SMS-C 30 and submits a request that an SMS message (Short Message Service) should be generated and transmitted to a GPRS subscriber having a particular MSISDN number (Mobile Station Integrated Services Digital Network) in accordance with the numbering plan used. This is performed over a transport protocol, such as TCP/IP or X25, in accordance with techniques that are well known to persons skilled in the art. The push server includes its own network address, i.e. its Internet Protocol (IP) address if the push server is connected to the Internet or an Intranet, in the submitted request. The push server 50 also generates an identification code which is included in the submitted request as an originator identification code. Furthermore, a port number to be used when setting up a TCP/IP-based connection towards the server 50 is included.
2. In step 2 the SMS-C 30 transmits the generated SMS message with the push server's 50 IP address and its generated originator identification code to the GPRS mobile station 20. The transmission is performed through the GSM/GPRS network 10 over a GSM signaling channel or on a GPRS traffic channel in accordance with state of the art techniques.
3. In step 3, an application already executing in the GPRS mobile station 20, or, which is started when the SMS message is received, extracts the payload of the SMS message. The SMS message could e.g. include an activation code, and if this code corresponds to a predefined code which is accepted by the application, the application processing proceeds, otherwise the application processing is stopped. Thus, if no activation code is found, the SMS message is treated in the usual way, which is outside the scope of the present invention. If the activation code is present, the application extracts the payload of the SMS message, i.e. the received IP address, port number and originator identification code. The received originator identification code is saved and a TCP/IP connection is set up towards the DNS server 40. This TCP/IP connection is preferably set up in accordance with the GPRS connection phase described below. The IP address received in the payload of the SMS message is then sent to the DNS server 40 over the established TCP/IP connection.
4. In step 4 the DNS server 40 looks up the IP address to find the corresponding identity, in this case a corresponding server host name. When found, the matching server host name is transmitted back to the GPRS station 20 over the TCP/IP connection. Thus, the GPRS station 20 is provided with the host name of the server 50 wishing to push information to it.
5. In step 5 the application is to determine whether or not packet data reception from push server 50 is desired. This is performed by displaying the host name of server 50 received from the DNS server 40 to the user on the display 26 associated with the GPRS station 20. The application then waits for the user to input a response using the keypad 27. When viewing the displayed host name, the user decides whether or not he wants to receive pushed packet data from the particular server. If the user inputs "yes", this indicates to the application that reception of packet data is confirmed, i.e. desired by the user. A "no" indicates that reception of packet data from push server 50 at this moment, and for some reason, is rejected. In the latter case, the execution of the application is stopped. If reception is confirmed, the application processing then continues to the GPRS connection phase.
   As previously described in the background section, when pushing information to a wireless communication station, there are three requirements that have to be met in order for a wireless communication network to be able to initiate the packet data transfer to the wireless station. These requirements, which are part of the GPRS connection phase, include that 1) the wireless station has been switched on, 2) the wireless station has identified itself to those parts of the wireless communication network that provides the packet data service, and that 3) a Packet Data Protocol (PDP) address has been allocated to the wireless station.
   In a GSM/GPRS network 10, after the requirements above have been met, measures are taken by the GSM/GPRS network for initializing and activating a packet data service to the wireless GPRS station 20, measures of the GPRS connection phase that are well known in the art. After activation of the packet data service, packet data addressed to the PDP address that has been allocated to a GPRS station 20 will be routed to that station. As described in the background section, the PDP address allocated to the GPRS station 20 is either a permanent (static) or a temporary (dynamic) address allocated to that station.
   Thus, in the GPRS connection phase the application identifies the GPRS station 20 for the packet data service part of the GSM/GPRS network 10, if it is not already identified. This corresponds to checking whether the GPRS station 20 is GPRS attached or not. If the GPRS station is not attached, the application performs a GPRS attach. The GPRS attach is preferably performed in accordance with standard procedure, see for example Draft ETSI EN 301 344 V6.4.0 (1999-08), chapter 6.2. The GPRS application then checks if the GPRS station 20 has a valid IP-address( i.e. if it has a working TCP/IP connection). If not, the application requests the GSM/GPRS network 10 to activate a packet data service to be used by the GPRS station 20, i.e. it initiates the performance of a GPRS PDP Context Activation. The GPRS application then either receives a dynamically allocated IP-address from the GSM/GPRS network 10 or from a Radius server (not shown) via the GSM/GPRS network. The GPRS PDP Context Activation and the transfer of a dynamic IP-address are preferably performed in accordance with standard procedure, see for example TS 101 348 V6.3.0 (1998-10), chapter 11.2.1.2. Of course, the GPRS application could alternatively already have a static IP address allocated to it when initiating the GPRS PDP Context Activation. The application of the GPRS station 20 then initiates establishment of a TCP/IP connection towards the IP-address and the port number received in the SMS message. The IP address and the port number designates the server 50 and a server application wishing to push packet data. Alternatively, when establishing the connection, the push server 50 is identified using the server host name received from the DNS server 40.
6. In step 6 the push server 50 recognizes that a TCP/IP connection has been set up from the GPRS station 20 to which it earlier initiated the transmission of an SMS message in order to accomplish the now established connection. This recognition is based on information which the GPRS station 20 has included in the response message, e.g. the MSISDN of the GPRS station 20 or a request code originally generated and included in the SMS message previously transmitted by the server 50. The push server 50 responds by first transmitting the same originator identification code which it earlier transmitted in the SMS message to the GPRS station. This will enable the GPRS station to verify that the push server 50 to which a TCP/IP connection now is established is the same server as that which transmitted the original SMS message triggering the set-up of the connection. After transmission of the identification code the push server 50 start transmitting packet data with information to the GPRS station 20.

In Fig. 2 a flow chart of the operation of a wireless communication station/GPRS mobile station and its included executing application is shown.

In step S1 the mobile user enters the IP address of the DNS server 40, which is stored in a memory 22 of the GPRS station 20 for later retrieval by an application executing in the GPRS station. Alternatively, this step S1 relates to the actual loading of the application in the GPRS mobile station, which application already includes the IP address of the DNS server 40.

In step S2 the application of the GPRS station receives an SMS message from which payload it extracts an IP address, port number and an originator identification code. The application then in step S3 establishes a TCP/IP connection with the DNS server using the prestored IP address. It then in step S4 transmits the IP address received in the SMS message and requests the DNS server to perform an address translation. In response to the request, the application in step S5 receives a host name from the DNS server.

In step S6 the received host name is displayed on the display 26 for the user of the GPRS station. It then in step S7 waits for a response from the user via the keypad 27. If the application receives a rejection, the execution returns to step S2. If a confirmation is received, the execution continues to step S8.

In step S8 the application establishes a TCP/IP connection with the originator of the IP address received in the SMS message, i.e. with the push server 50. It then once again receives an originator identification code from the push server, this time in step S9 over the TCP/IP connection, which code in step S10 is matched against the identification code previously received in the SMS message. If no match is found, the execution returns to step S2. If a match is found, the execution continues to step S11, in which step packet data transmissions are accepted and received from the push server.

## Claims

1. A method at a wireless communication station(20), the station being operatively associated with a wireless communication network (10) providing packet data transferring services, wherein the wireless communication station (20) performs the steps of:
receiving a network address of an originator (50) of packet data;
determining, based upon an identity, whether or not packet data reception from the originator(50) is desired, **characterized in that** the wireless communication station (20) performs the additional steps of:
acquiring, prior to said determining step, said identity corresponding to the received network address;
establishing, if it is determined that the packet data reception from said originator is desired, a packet data session with said originator using either of:
a) the network address of said receiving step, or
b) said identity,
thereby facilitating desired packet data to be pushed from said originator (50) to the wireless communication station (20).

2. The method as claimed in claim 1, wherein said determining step includes:
displaying said identity on displaying means(26) associated with the wireless communication station(20);
accepting, from a user of the wireless station, either a confirmation or a rejection regarding reception of packet data from said originator (50) having the displayed identity.

3. The method as claimed in claim 1 or 2, wherein said acquiring step includes:
establishing a packet data session with an address translation server(40); and
requesting translation of the network address to the corresponding identity.

4. The method as claimed in any one of claims 1 - 3, wherein said network address of said receiving step is received in a short message, the short message being received from a short message service(30) provided by said wireless communication network(10).

5. The method as claimed in any one of claims 1 - 4, wherein said network address is an Internet Protocol address.

6. The method as claimed in any one of claims 1 - 5, wherein said identity is a network server name.

7. The method as claimed in claim 6, wherein said network server name is an Internet domain host name of a network server.

8. The method as claimed in any one of claims 1 - 7, further including:
receiving a first originator identification code in said receiving step;
receiving a second originator identification code over the packet data session established with the originator (50); and
verifying, based on a comparison between the first and the second identification code, that the packet data session was established with the originator (50) of the received network address.

9. A computer-readable medium storing computer-executable components for causing a wireless communication station(20) to perform the steps recited in any one of claims 1 - 8 when the computer-executable components are run on microprocessor included by a wireless communication station.

10. A wireless communication station(20) arranged to be operatively associated with a wireless communication network(10) providing packet data transferring services, wherein the wireless communication station includes processing means(21), memory means(22), interface circuitry means(23) and user interface means(26, 27) for performing the steps recited in any one of claims 1 - 9, thereby facilitating desired packet data to be pushed from an originator (50) to the wireless communication station (20).

## Patentansprüche

1. Verfahren an einer Funk-Kommunikationsstation (20), wobei die Station funktionell mit einem Funk-Kommunikationsnetz (10) verbunden ist, das Paketdaten-Übertragungsdienste bereitstellt, und die Funk-Kommunikationsstation (20) die folgenden Schritte durchführt:
Empfangen einer Netz-Adresse einer Quelle (50) von Paketdaten;
auf Basis einer Identität Bestimmen, ob Paketdaten-Empfang von der Quelle (50) gewünscht wird oder nicht, **dadurch gekennzeichnet, dass** die Funk-Kommunikationsstation (20) die folgenden zusätzlichen Schritte durchführt:
vor dem Bestimmungsschritt Erfassen der Identität, die der empfangenen Netz-Adresse entspricht;
wenn festgestellt wird, dass der Paketdaten-Empfang von der Quelle gewünscht wird, Eröffnen einer Paketdaten-Sitzung mit der Quelle unter Verwendung entweder:
a) der Netz-Adresse des Empfangsschritts, oder
b) der Identität,
um so zu ermöglichen, dass gewünschte Paketdaten von der Quelle (50) zu der Funk-Kommunikationsstation (20) weitergeleitet werden.

2. Verfahren nach Anspruch 1, wobei der Bestimmungsschritt einschließt:
Anzeigen der Identität auf einer Anzeigeeinrichtung (26), die zu der Funk-Kommunikationsstation (20) gehört;
Annehmen entweder einer Bestätigung oder einer Ablehnung bezüglich des Empfangs von Paketdaten von der Quelle (50) mit der angezeigten Identität, von Seiten eines Benutzers der Funk-Station.

3. Verfahren nach Anspruch 1 oder 2, wobei der Erfassungsschritt einschließt:
Eröffnen einer Paketdaten-Sitzung mit einem Adressumsetzungs-Server (40); und
Anfordern von Umsetzung der Netz-Adresse in die entsprechende Identität.

4. Verfahren nach einem der Ansprüche 1 - 3, wobei die Netz-Adresse des Empfangsschritts in einer Kurzmitteilung empfangen wird und die Kurzmitteilung von einem Kurzmitteilungs-Dienst (30) empfangen wird, der von dem Funk-Kommunikationsnetz (10) bereitgestellt wird.

5. Verfahren nach einem der Ansprüche 1 - 4, wobei die Netz-Adresse eine Internet-Protokoll-Adresse ist.

6. Verfahren nach einem der Ansprüche 1 - 5, wobei die Identität ein Netzserver-Name ist.

7. Verfahren nach Anspruch 6, wobei der Netzserver-Name ein Internet-Domänen-Host-Name eines Netzservers ist.

8. Verfahren nach einem der Ansprüche 1 - 7, das des Weiteren einschließt:
Empfangen eines ersten Quellen-Identifizierungscodes in dem Empfangsschritt; Empfangen eines zweiten Quellen-Identifizierungscodes über die mit der Quelle (50) eröffnete Paketdaten-Sitzung und
auf Basis eines Vergleichs zwischen dem ersten und dem zweiten Identifizierungscode Bestätigen, dass die Paketdaten-Sitzung mit der Quelle (50) der empfangenen Netz-Adresse eröffnet wurde.

9. Computerlesbares Medium, das durch Computer ausführbare Komponenten speichert, die eine Funk-Kommunikationsstation (20) veranlassen, die in einem der Ansprüche 1 bis 8 aufgeführten Schritte durchzuführen , wenn die durch Computer ausführbaren Komponenten auf einem Mikroprozessor ausgeführt werden, der in einer Funk-Kommunikationsstation enthalten ist.

10. Funk-Kommunikationsstation (20), die so eingerichtet ist, dass sie funktionell mit einem Funk-Kommunikationsnetz (10) verbunden ist, das Paketdaten-Übertragungsdienste bereitstellt, wobei die Funk-Kommunikationsstation eine Verarbeitungseinrichtung (21), eine Speichereinrichtung (22), eine Schnittstellenschaltungs-Einrichtung (23) und eine Benutzerschnittstellen-Einrichtung (26, 27) zum Durchführen der in einem der Ansprüche 1 - 9 aufgeführten Schritte enthält, um so zu ermöglichen, dass gewünschte Paketdaten von einer Quelle (50) zu der Funk-Kommunikationsstation (20) weitergeleitet werden.

## Revendications

1. Procédé mis en oeuvre au niveau d'une station de communication sans fil (20), la station étant associée de manière fonctionnelle à un réseau de communication sans fil (10) qui fournit des services de transfert de données en paquets, la station de communication sans fil (20) exécutant les étapes qui consistent à:
recevoir une adresse de réseau d'un émetteur (50) de données en paquets; et
déterminer, en fonction d'une identité, si une réception de données en paquets provenant de l'émetteur (50) est souhaitée ou non, **caractérisé en ce que** la station de communication sans fil (20) exécute les étapes supplémentaires qui consistent à:
acquérir, préalablement à ladite étape de détermination, ladite identité correspondant à l'adresse de réseau reçue; et
établir, s'il est déterminé que la réception de données en paquets provenant dudit émetteur est souhaitée, une session de données en paquets avec ledit émetteur en utilisant:
a) l'adresse de réseau de ladite étape de réception, ou
b) ladite identité,
pour ainsi faciliter un acheminement des données en paquets souhaitées dudit émetteur (50) à la station de communication sans fil (20).

2. Procédé tel que défini dans la revendication 1,
dans lequel ladite étape de détermination comprend:
l'affichage de ladite identité sur des moyens d'affichage (26) associés à la station de communication sans fil (20); et
l'acceptation, de la part d'un utilisateur de la station de communication sans fil, d'une confirmation ou d'un refus concernant la réception de données en paquets provenant dudit émetteur (50) présentant l'identité affichée.

3. Procédé tel que défini dans la revendication 1 ou 2, dans lequel ladite étape d'acquisition comprend:
l'établissement d'une session de données en paquets avec un serveur de traduction d'adresse (40); et
la demande de traduction de l'adresse de réseau dans l'identité correspondante.

4. Procédé tel que défini dans l'une quelconque des revendications 1 à 3, dans lequel ladite adresse de réseau de ladite étape de réception est reçue dans un message court, le message court étant reçu d'un service de message court (30) fourni par ledit réseau de communication sans fil (10).

5. Procédé tel que défini dans l'une quelconque des revendications 1 à 4, dans lequel ladite adresse de réseau est une adresse de Protocole Internet.

6. Procédé tel que défini dans l'une quelconque des revendications 1 à 5, dans lequel ladite identité est un nom de serveur de réseau.

7. Procédé tel que défini dans la revendication 6,
dans lequel ledit nom de serveur de réseau est un nom d'hôte de domaine Internet d'un serveur de réseau.

8. Procédé tel que défini dans l'une quelconque des revendications 1 à 7, comprenant également:
la réception d'un premier code d'identification d'émetteur au cours de ladite étape de réception;
la réception d'un second code d'identification d'émetteur pendant la session de données en paquets établie avec l'émetteur (50); et
la vérification, en fonction d'une comparaison entre le premier et le second code d'identification, que la session de données en paquets a été établie avec l'émetteur (50) de l'adresse de réseau reçue.

9. Support lisible par ordinateur stockant des éléments exécutables par ordinateur pour amener une station de communication sans fil (20) à exécuter les étapes définies dans l'une quelconque des revendications 1 à 8 lorsque les éléments exécutables par ordinateur sont exécutés sur un microprocesseur faisant partie d'une station de communication sans fil.

10. Station de communication sans fil (20) conçue pour être associée de manière fonctionnelle à un réseau de communication sans fil (10) qui fournit des services de transfert de données en paquets, la station de communication sans fil comprenant des moyens de traitement (21) des moyens de mémorisation (22), des moyens formant circuits d'interface (23) et des moyens d'interface utilisateur (26, 27) pour exécuter les étapes définies dans l'une quelconque des revendications 1 à 9, pour ainsi faciliter un acheminement de données en paquets souhaitées d'un émetteur (50) à la station de communication sans fil (20).
